# EUROPEAN PATENT SPECIFICATION

(11) **EP 4 071 383 B1**
(45) Date of publication and mention of the grant of the patent: **27.08.2025**
(21) Application number: 21167644.0
(22) Date of filing: 09.04.2021
(51) Int. Cl.: F16H 7/12, B02C 1/00, F16H 57/04

(54) **A CRUSHER BELT TENSIONING APPARATUS**
BRECHERRIEMENSPANNVORRICHTUNG
APPAREIL DE TENSION DE COURROIE DE BROYEUR

(43) Date of publication of application: 12.10.2022
(73) Proprietor: Sandvik Ltd, Dungannon, Tyrone BT70 2HW (GB)
(72) Inventor: BAXTER, Adam, Dungannon, BT70 2HW (GB)
(74) Representative: Sandvik

(56) References cited:
- EP-A1- 3 233 285
- EP-B1- 2 777 815
- WO-A1-2008/140951
- AT-B1- 511 908
- CN-U- 211 801 545
- DE-A1- 102016 100 509
- US-A1- 2015 372 562
- US-A1- 2018 051 779

## Description

### Field of Invention

This invention relates to a crusher belt tensioning apparatus and to a crusher comprising the belt tensioning apparatus.

### Background of the Invention

A variety of different crushers have evolved suitable for processing stone, minerals and both domestic and industrial waste including construction materials to generate smaller particulate material and aggregate for subsequent processing or disposal. Conventional crushers include cone, impact, vibration and jaw crushers. Typically, the crusher is provided with a hopper for receiving the bulk material and a discharge conveyor to transfer the processed and crushed material to a discharge location.

Crushers can also be categorised into mobile crushers that are readily transportable from one site to another and stationary crushers designed for large static installations that are assembled on site e.g. at a quarry or mine environment where they remain until the source of raw material is exhausted.

Mobile crushers typically comprise endless tracks mounted at an undercarriage which is in turn supported by a main chassis of the mobile crusher.

An on-board mounted power unit is configured to drive operation of the crusher via a belt drive assembly in which a belt is mounted about a pair of pulleys respectively connected to a crusher drive shaft and a powered drive shaft so as to transfer drive from a power unit to the crusher. Conventionally, the belt drive assembly is provided with a belt tensioning device which provides tension to the belt to both prevent belt slippage over the pulley wheels and to redress belt stretch following periods of use.

However, conventional belt tensioning devices suffer from a number of disadvantages. For example, known belt tensioning devices are manually operated requiring operatives to manually tension belts in close proximity to nip points and moving parts in the belt drive assembly which gives rise to a risk of injury to the operatives. A typical example of a manually operated belt tensioning device is the turnbuckle tensioner as described EP 2777815 B1. In addition, known belt tensioning devices generally employ a tensioning drum to contact the drive belt where the tensioning drum is positioned within or internally of the path of the belt and the position of the tensioning drum in relation to the drive belt is adjusted manually. In these manually operated arrangements, the location of the tensioning drum within the path of the belt can reduce accessibility to the tensioning drum and increase the risk of injury to operatives. Furthermore, it is common for the belt to misalign at the drum and to impart vibrations to the revolving belt resulting in high belt and bearing temperatures. Examples of such belt tensioning arrangements are also to be found in CN 211801545, US 2018/0209517, EP 2189222, WO 2008/140951 and US 2005/0187502.

Additionally, known tensioning devices utilise shock absorbers to absorb vibration and tension forces imparted to the belt particularly during crusher start-up and shut-down which would otherwise damage the crusher and power unit drive shaft. However, conventional spring type shock absorbers are susceptible to accumulation of dirt causing them to crack thus preventing shock absorbing compression as intended.

An object of the invention is to provide a belt tensioning apparatus for a crusher such as an impact, jaw or cone crusher that solves at least some of the problems of the prior art.

### Summary of the Invention

According to the invention there is provided a crusher belt tensioning apparatus for mounting on a crusher comprising the features of claim 1.

This geometry and conformation of the crusher belt tensioning apparatus and in particular the use of a tension arm having a first relatively short arm portion and a second relatively long arm portion connected to the first relatively short arm portion in which the hydraulic cylinder is connected to short arm portion ensures that the tension arm can be lowered down fully for maintenance and allows the creation of a clear path for safe and easy removal of the belt without any obstructions. This arc of movement subsequently reduces the overall belt length required, which in turn reduces the amount of tension that needs to be applied employing the crusher belt tensioning apparatus. The conformation and geometry of the apparatus also ensures that an optimum wrap angle range is always achieved on the drive pulley and crusher pulley during operation.

In a preferred embodiment, the tension arm is a remotely operable tension arm. The remotely operable nature of the crusher belt tensioning apparatus of the invention, and in particular the remotely operable tension arm, ensures that any hazards such as being in close proximity to nip points and moving parts experienced with the manually operated prior art devices are eliminated.

Preferably, the belt defines a belt circuit having an inner region enclosed by the belt and the tension drum is disposed outside the inner region so that the tension drum is in contact with an outer face of the belt. This arrangement facilitates easy access to the tension drum by an operative without any obstruction from the tension belt and also maximises contact between the tension belt and the pulleys.

Alternatively, the belt defines a belt circuit having an inner region enclosed by the belt and the tension drum is disposed inside the inner region so that the tension drum is in contact with an inner face of the belt. This arrangement provides an alternative configuration in which tension is applied using a downward movement of the tension drum.

The pivot point on the short arm portion allows for optimal tensioning for minimal movement of the tension arm. Preferably, the short-arm portion is mounted on a spigot pin mounting at the pivot point. The spigot pin mounting allows for ease of assembly of the apparatus of the invention and smooth and efficient arcuate movement of the tension arm.

The adjustable bearing housings ensure perfect belt alignment.

In a preferred embodiment, the relatively short arm portion is disposed at an angle to the relatively long arm portion. As a result, maximum rotation for minimal movement of the tension arm is possible.

Advantageously, the apparatus further comprises a lock to lock the apparatus in the first belt tensioning operating position. Accordingly, the apparatus of the invention is secured in place in use.

Suitably, the apparatus comprises a shock absorber to dampen shock on the apparatus. Preferably, the shock absorber comprises semi-bonded bushes. The semi-bonded bushes are resistant to damage in use to effectively dampen shock loads.

Advantageously, the tension drum comprises remotely greasable internal bearings. The remotely greasable bearings increase the lifespan of the system and eliminate potential safety risks to operatives compared with manually greased bearings.

The invention also extends to a crusher comprising a crusher belt tensioning apparatus as hereinbefore defined.

In one embodiment, the crusher belt tensioning apparatus of the crusher is operable independently of crushing operations. Accordingly, the crusher belt tensioning apparatus can be operated with the crusher power unit shut down so that belt tension can be measured and set safely. As a result, the belt tensioning apparatus of the crusher can be independently operated to allow the tension belt to bed in without requiring activation of the crusher power unit.

In a preferred embodiment, the crusher is an impact, jaw or cone crusher.

The use of semi bonded bushes to dampen shock loads on the apparatus in use also optimises performance and reduces downtimes associated with conventional spring type shock absorbers in the apparatus of the prior art.

In addition, the adjustable bearing housings of the apparatus of the invention facilitates multi directional belt alignment to ensure perfect belt alignment.

If desired, the apparatus can be operated electronically with the crusher central power unit shut down to enable belt tension to be measured and set safely. The apparatus can then be run to allow the belt to bed in without the need to start up the crusher central power unit.

The crusher belt tensioning apparatus of the invention is suitable for use in a range of crushers such as impact, jaw, cone or other crusher types which can be mobile or stationary crushers.

### Brief Description of the Drawings

The invention will now be described, by way of example only, with reference to the accompanying drawings in which:
Figure 1 is a side view of a crusher belt tensioning apparatus of the prior art in which the tension pulley is manually adjusted with a turnbuckle with the tension pulley in the non-tensioning position;
Figure 2 is a side view of the crusher belt tensioning apparatus of Figure 1 with the tension pulley in the belt tensioning position;
Figure 3 is a is a side view of an impact crusher of the invention fitted with a crusher belt tensioning apparatus of the invention with the tension pulley of the crusher belt tensioning apparatus in the belt tensioning operating position;
Figure 4 is an enlarged perspective view from above and one side of the crusher belt tensioning apparatus of Figure 3;
Figure 5 is a side view of the crusher belt tensioning apparatus of Figure 4 with the lock omitted;
Figure 6 is an enlarged perspective view from above and one side of the crusher belt tensioning apparatus of Figure 3 with the tension pulley in the non-tensioning maintenance position so that the belt is removable from the tensioning apparatus and with the lock omitted;
Figure 7 is a side view of the crusher belt tensioning apparatus of Figure 6 with the shock absorbing semi-bonded bushes omitted;
Figure 8 is an enlarged rear perspective view from above and one side of the tension arm with the adjustable bearing housing positioned at the pivot point of the tension arm on the short arm portion of the tension arm;
Figure 9 is a further enlarged rear perspective view from above and one side of the adjustable bearing housing of Figure 8;
Figure 10 is an enlarged front perspective view from above and one side of the tension arm and spigot pin mounting, and
Figure 11 is a further enlarged front perspective view from above and one side of the spigot pin mounting of Figure 10.

### Detailed Description of the Invention

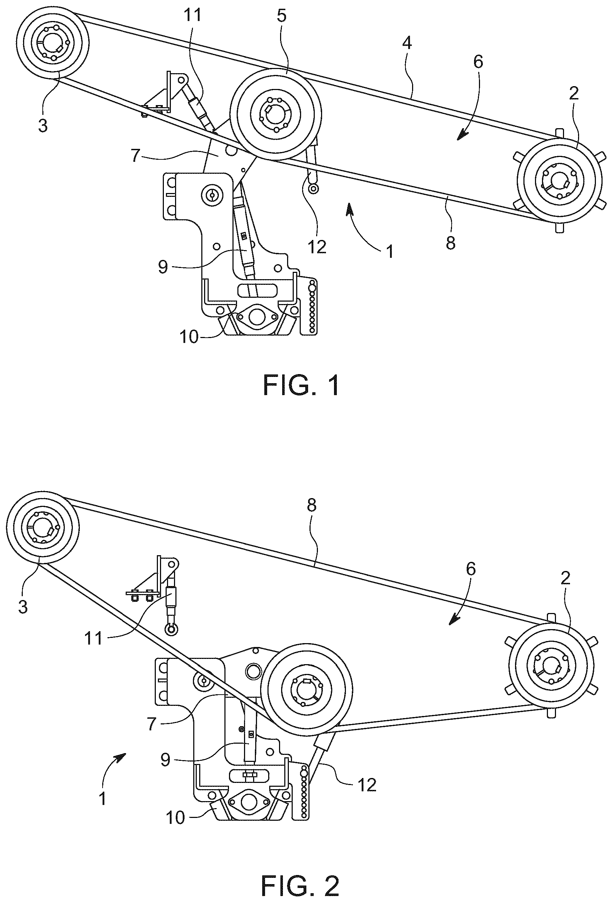

Figures 1 and 2 show a manually operated crusher belt tensioning apparatus 1 of the prior art.

As shown in the drawings, the crusher belt tensioning apparatus 1 is generally made up of a driven crusher pulley 2, a drive pulley 3 and an endless belt 4 extending between the crusher pulley 2 and the drive pulley 4. A tension pulley 5 is positioned between the crusher pulley 2 and the drive pulley 3 in an inner region 6 defined and enclosed by the belt 4. The tension pulley 5 is mounted on a pivotable tension/swing arm 7 so that the tension pulley 5 is in contact with an inner face 8 of the belt 4. The tension pulley 5 is movable between a belt non-tensioning position shown in Figure 1 and a belt tensioning position shown in Figure 2 by pivoting the swing arm 7. The swing arm 7 is pivoted by manually adjusting a turnbuckle 9 which extends between the swing arm 7 and a frame 10.

In the belt non-tensioning position shown in Figure 1, the swing arm 7 is locked in position by a lock 11. Conversely, in the belt tensioning position shown in Figure 2, the lock 11 is released and the tension pulley 5 is secured to the frame 10 via a shock absorber 12.

As the turnbuckle 9 must be manually operated to move the tension pulley 5 between the bent non-tensioning and belt-tensioning positions, operatives can be exposed to safety hazards caused by nip points and moving parts on the crusher.

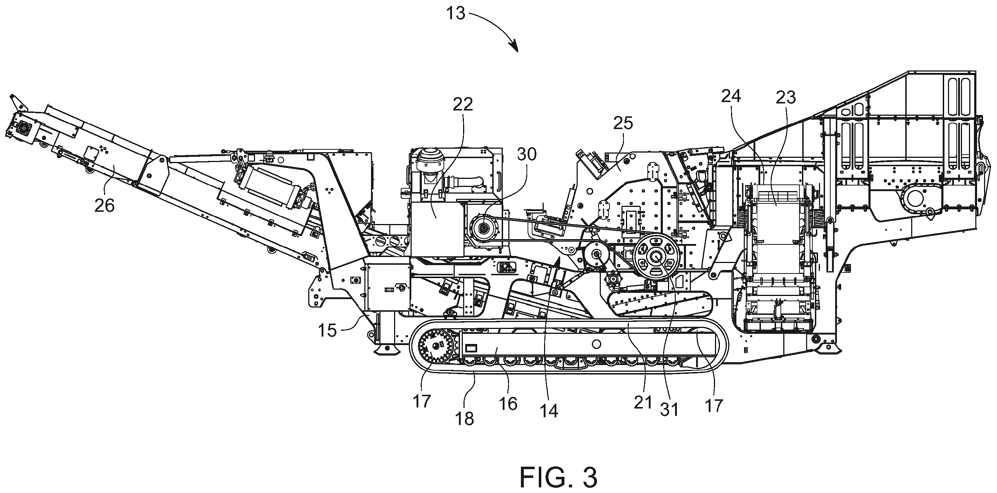

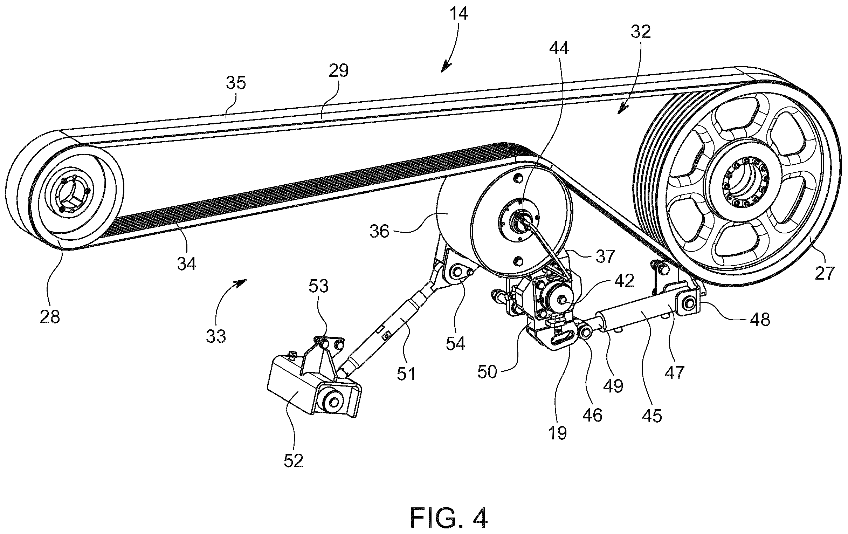

Figure 3 shows a side view of a crusher of the invention in the form of a mobile impact crusher 13 fitted with a crusher belt tensioning apparatus 14 of the invention. Although the invention is described in relation to the mobile impact crusher 13 of Figure 3, it will be appreciated by those skilled in the art that the crusher belt tensioning apparatus 14 of the invention shown in Figures 4 to 11 is suitable for use in a range of crushers such as impact, jaw, cone or other crusher types in which tensioning is required. Accordingly, the crusher belt tensioning apparatus 14 of the invention should not be construed as being limited to any particular crusher type.

The crusher 13 comprises a main frame 15 providing a central support for the operative components of the crusher 13. A chassis 16 is mounted to a lower region of frame 15 that in turns mounts two sets of wheels 17 around which extends a continuous belt track 18. In particular, the crusher 13 includes a pair of endless tracks 21 (and associated drive components) positioned laterally at each side of the chassis 16 at the lower region of frame 15. The wheels 17 are driven by a power unit 22 so as to drive each belt 21 to propel the crusher 13 over the ground.

The main frame 15 further supports a feed conveyor 23 having a discharge end 24 which fees material to be crushed to a crusher 25 mounted on the main frame 15.

A discharge conveyor 26 projects forwardly of the main frame 15 and is arranged to receive material discharged from the crusher 25 and to discharge the crushed material from the crusher 25.

As indicated above, in the present embodiment, the crusher 25 is an impact crusher in which material to be crushed is flung at speed against the walls of the crusher to break the material.

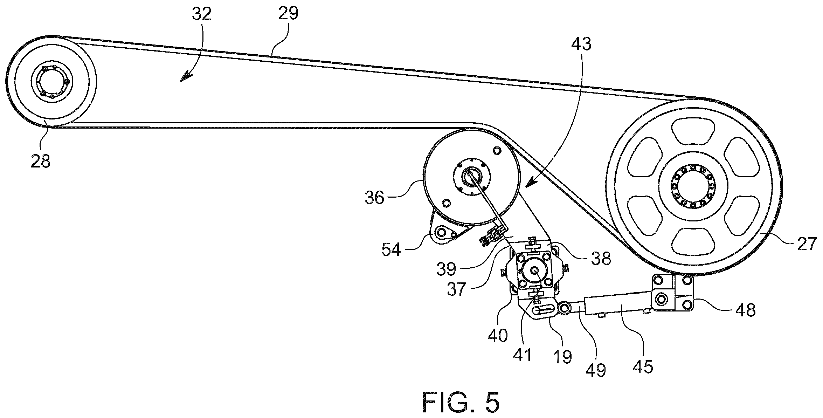

Figures 4 and 5 show enlarged views of the crusher belt tensioning apparatus 14 of Figure 3 in the belt tensioning operating position. As shown in the drawings, the crusher belt tensioning apparatus 14 is made up of a driven crusher pulley 27, a drive pulley 28 spaced apart from the crusher pulley 27 and an endless belt 29 extending between the crusher pulley 27 and the drive pulley 28 to transfer drive from the drive pulley 28 to the crusher pulley 27. The crusher pulley 27 is mounted on a crusher pulley shaft 30 mounted on the main frame 15 and the drive pulley 28 is mounted on a drive shaft 31 also mounted on the main frame 15. In one embodiment, the drive shaft 31 can be coupled to a crusher main shaft (not shown) which is in turn coupled to the power unit 22. The power unit 22 can comprise a diesel engine in turn coupled to a clutch. Accordingly, the belt 29 transfers drive from the drive pulley 28 to the crusher pulley 27 to drive the crushing action of the crusher. However, in another embodiment, the crusher belt tensioning apparatus 14 can be operated electronically independently of the power unit 22 i.e. with the power unit 22 shut down to enable belt 29 tension to be measured and set safely independently of the power unit 22 and crushing operations. The crusher belt tensioning apparatus 14 can then be run to allow the belt 29 to bed in without the need to start up the power unit 22.

The endless belt 29 of the crusher belt tensioning apparatus 14 defines a belt circuit having an inner region 32 within which the crusher pulley 27 and the drive pulley 28 are positioned and an exterior region indicated by the reference numeral 33. Accordingly, the endless belt 29 has an inner face 34 disposed towards the inner region 32 and an outer face 35 disposed towards the exterior region 33.

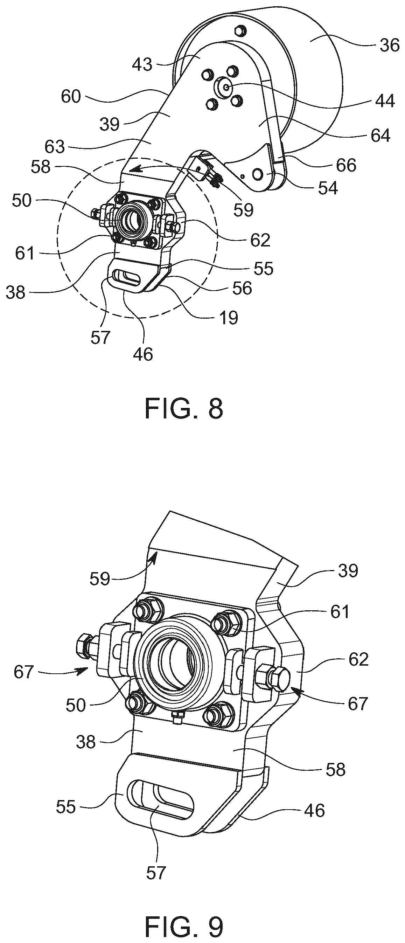

In the present embodiment, a tension drum 36 for applying a tension force to the belt 29 is mounted outside the inner region 32 at the exterior region 33 between the crusher pulley 27 and the drive pulley 28 on an elongate tension arm 37. As described in more detail below in Figures 8 and 9, the tension arm 37 is made up of a relatively short arm portion 38 and a relatively long arm portion 39 contiguous with the short arm portion 38 with the short arm portion 38 and the long arm portion 39 being disposed at an angle to each other (i.e. cranked) to define a substantially dog-leg shaped tension arm 37. The tension arm 37 is mounted on a tension arm mounting bracket 40 attached to the crusher main frame 15 at a pivot point 41 about which the tension arm 37 can rotate. More particularly, a spigot pin mounting 42 is provided at the pivot point 41 to rotatably support the tension arm 37.

The tension drum 36 can be provided with internal bearings (not shown) that are remotely greasable to increase the lifespan of the crusher belt tensioning apparatus 14 and further eliminate any potential safety risks to operators.

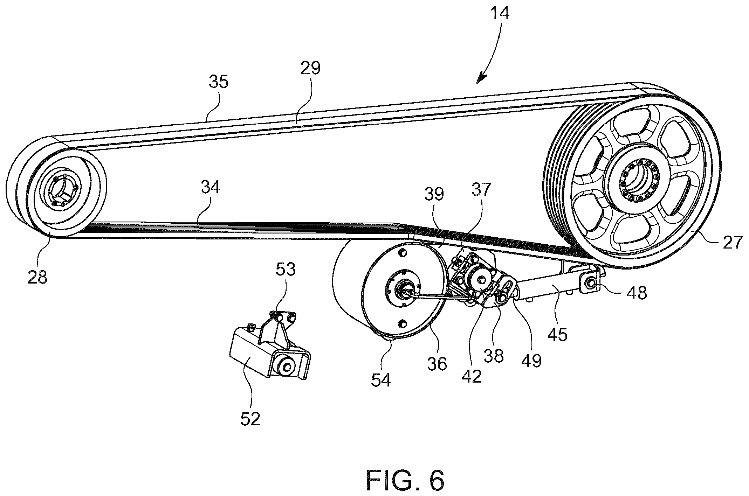

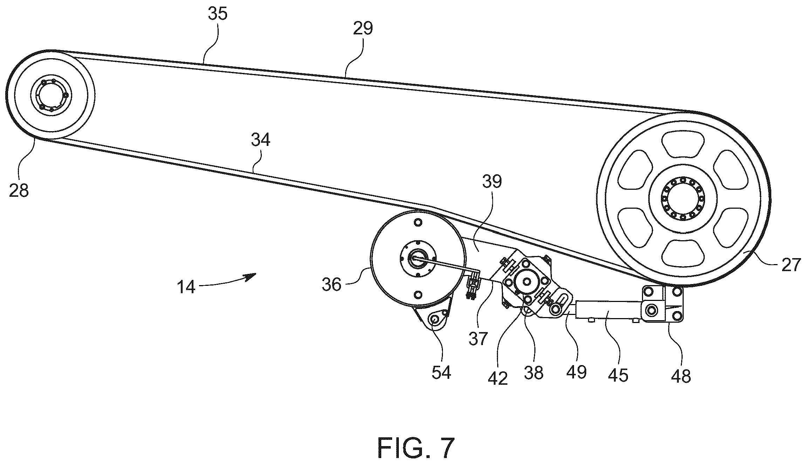

The tension drum 36 is mounted towards a free end 43 of the long arm portion 39 of the tension arm 37 at a tension drum shaft 44 (see also Figure 8) while a remotely operable hydraulic cylinder 45 is connected at one end to the tension arm 37 towards a free end 19 of the short arm portion 38 of the tension arm 37 at a hydraulic cylinder mounting 46 to effect rotating movement of the tension arm 37 and hence the tension pulley 36 between a the belt tensioning operating position shown in Figures 4 and 5 and the belt non-tensioning maintenance position shown in Figures 6 and 7. More particularly, the hydraulic cylinder 45 is made up of a hydraulic cylinder shell 47 attached to the crusher main frame 15 at hydraulic cylinder bracket 48 and a piston or ram 49 extending from the hydraulic cylinder shell 47 to the hydraulic cylinder mounting 46 on the short arm portion 38 of the tension arm 37.

An adjustable bearing housing 50 is mounted between the tension arm 37, and more particularly between the short arm portion 38 of the tension arm 37, and the spigot pin mounting 42 to enable multi-directional belt 29 alignment as required.

As shown particularly in Figure 4, the tension drum 36 can be secured in the belt tensioning operating position with a removable mechanical lock 51. In the present embodiment, the lock 51 is secured in place between semi-bonded bushes 52 provided on a semi-bonded bushes mounting 53 attached the crusher main frame 15 and a lock mounting 54 provided on the long arm portion 39 of the tension arm 36 (see also Figure 8). As with the hydraulic cylinder 45, the lock 51 can also be remotely operated.

Figures 6 and 7 show the crusher belt tensioning apparatus 14 with the tension drum 36 in the non-tensioning maintenance position so that the belt 29 is removable from the tensioning apparatus 14. Like numerals indicate like parts. As shown in the drawings, the tension drum 36 is fully lowered into the non-tensioning maintenance position in the exterior region 33 by the action of the hydraulic cylinder 45 on the short arm portion 38 of the tension arm 37 so that the tension arm 37 is rotated arcuately downwards at the spigot pin mounting 42 to remove tension from the belt 29. Accordingly, in the present embodiment, by being located in the exterior region 33 in both the first belt tensioning operating position and the second belt non-tensioning maintenance position ease of access to the apparatus of the invention for maintenance purposes is further enhanced.

Figures 8 and 9 show enlarged rear views of the tension arm 37 and adjustable bearing housing 50 of Figures 3 to 7. As shown in the drawings, the tension arm 37 is platelike in construction and is made up of the relatively short arm portion 38 and the relatively long arm portion 39 which is contiguous with the short arm portion 38 to define a unitary tension arm 37 structure the short-arm portion 38 is not separable from or hingedly attached to the long-arm portion 39 - both the short-arm portion 38 and the long arm portion 39 are integral with each other to form the unitary tension arm 37. As indicated above, the short arm portion 38 and the long arm portion 39 are disposed at an angle to each other (i.e. cranked) to define a substantially dog-leg shaped tension arm 37. More particularly, an angled edge indicated by the reference numeral 59 is defined in an outer edge 60 of the tension arm 37 to demarcate the short arm portion 38 from the long arm portion 39.

The short-arm portion 38 is provided with the hydraulic cylinder mounting 46 at its free end 19 which is made up of two spaced apart plates 55 defining a hydraulic piston receiving slot gap. Each plate 55 is further provided with opposing slots 57 for receiving the hydraulic piston 49. The adjustable bearing housing 50 is mounted on the rear face 58 of the short-arm portion 38 substantially midway between the angled edge 59 and the hydraulic cylinder mounting 46 via adjustable bearing housing mountings 61. The short-arm portion 38 is also provided with opposite laterally extending wings 62 at the adjustable bearing housing 50 to accommodate the adjustable bearing housing 50 on the short arm portion 38. The adjustable bearing housing 50 allows for multi-directional and optimal alignment of the belt 29 via adjusters 67 provided on the adjustable bearing housing 50.

The long arm portion 39 extends upwards from the short arm portion 38 from the angled edge 59 of the tension arm 37 and is in turn made up of a neck 63 which extends at an angle defined by the angled edge 59 from the short-arm portion 38 and a head 64 at its free end 43 on which the tension drum 36 is mounted at the tension drum shaft 44 on the front face 65 of the tension arm 36. The head 64 is shaped to define a nose portion 66 for supporting the lock mounting 54.

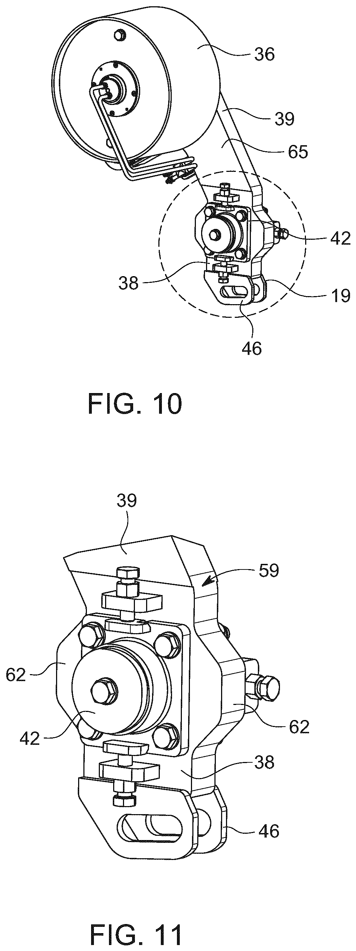

As shown in Figures 10 and 11, the spigot pin mounting 42 is mounted on the front face 65 of the tension arm 36 in a position corresponding with the adjustable bearing housing 50.

In use, the crusher belt tensioning apparatus 14 of a crusher 13 (which can be an impact, jaw, cone or other crusher and is exemplified as an impact crusher in Figure 3) remotely tensions the belt 29 as shown in Figures 4 and 5 by remotely operating the hydraulic cylinder 45 to urge the tension drum 36 upwards against the outer face 35 of the belt 29 (the first belt tensioning operating position). By being operable remotely, the hazards involved with prior art methods of manually tensioning the belts 29 in close proximity to nip points and moving parts are eliminated.

More particularly, the hydraulic cylinder 45 operates against the short arm portion 38 of the tension arm 37 so that the tension arm 37 is rotatable moved arcuately on the spigot pin mounting 42 upwards and the tension drum 36 on the long arm portion 39 tensions the belt 29. By acting on the short arm portion 28, the resulting arc of movement reduces the overall belt length required, which in turn reduces the amount of tension required to tension the belt 29.

Once the belt 29 is tensioned, the crusher belt tensioning apparatus 14 can be mechanically locked in place via the lock 51. Moreover, a shock absorber 52 at the lock 51 in the form of shock absorbing semi-bonded bushes 52 dampen any shock loads experienced by the crusher belt tensioning apparatus 14 during operation. As indicated above, the adjustable bearing housing 50 facilitates multi directional belt alignment and optimal belt 29 alignment.

As shown in Figures 6 and 7, in order to remove tension from the belt 29 and move the tension drum 36 to the belt non-tensioning maintenance position so that the belt 29 is removable from the crusher belt tensioning apparatus 14, the hydraulic cylinder 45 is once again remotely operated to operate on the short arm portion 38 of the tension arm 37 to urge the tension arm 37 and hence the tension drum 36 fully downwards thus releasing tension on the belt 29 and allowing for safe removal of the belt 29 without any obstructions - i.e. a clear path for removal of the belt 29 is created by remote operation of the hydraulic cylinder 45.

Due to the geometry of the crusher belt tensioning apparatus 14 and in particular the geometry of the tension arm 37, an optimal belt wrap angle range is always achieved on the crusher pulley 27 and the drive pulley 28 during operation. In addition, by connecting the hydraulic cylinder 45 to the short-arm portion 38 of the tension arm 37, maximum rotation of the tension arm 37 for minimal movement is achieved.

If desired, the crusher belt tensioning apparatus 14 can be operated electronically with the power unit 22 shut down to enable belt tension to be measured and set safely. The crusher belt tensioning apparatus 14 can then be run to allow the belt 29 to bed in without the need to start up the power unit 22.

## Claims

1. A crusher belt tensioning apparatus (14) for mounting on a crusher (13) having:
a driven crusher pulley (27) to actuate a crusher (13);
a drive pulley (28) drivable by a power unit;
a belt (29) extending between the crusher pulley (27) and the drive pulley (28) to transfer drive from the power unit to the crusher (13);
a tension drum (36) mounted on a tension arm (37) for applying a tension force to the belt (29), the tension arm (37) comprising a first short arm portion (38) and a second long arm portion (39) connected to the first short arm portion (38) and being longer than the short arm portion (38),
wherein the tension drum (36) is movable by a hydraulic cylinder (45) attached to the relatively short arm portion (38) between a first belt tensioning operating position in which the tension drum (36) applies tension to the belt (29) and a second belt non-tensioning maintenance position in which the belt (29) is removable from the tensioning apparatus (14),
wherein the tension arm (37) is arcuately movable between the first belt tensioning operating position and the second belt non-tensioning maintenance position about a pivot point (41) defined on the short arm portion (38) of the tension arm (37),
**characterized in that** the apparatus (14) comprises adjustable bearing housings (50) between the pivot point (41) and the tension arm (37) and configured for allowing multi-directional belt alignment.

2. A crusher belt tensioning apparatus (14) as claimed in Claim 1 wherein the tension arm (37) is a remotely operable tension arm (37).

3. A crusher belt tensioning apparatus (14) as claimed in Claim 1 or Claim 2 wherein the belt (29) defines a belt circuit having an inner region (32) enclosed by the belt (29) and the tension drum (36) is disposed outside the inner region (32) so that the tension drum (36) is in contact with an outer face (35) of the belt (29).

4. A crusher belt tensioning apparatus (14) as claimed in Claim 1 or Claim 2 wherein the belt (29) defines a belt circuit having an inner region (32) enclosed by the belt (29) and the tension drum (36) is disposed inside the inner region (32) so that the tension drum (36) is in contact with an inner face (34) of the belt (29).

5. A crusher belt tensioning apparatus (14) as claimed in Claim 1 wherein the short-arm portion (38) is mounted on a spigot pin mounting (42) at the pivot point (41).

6. A crusher belt tensioning apparatus (14) as claimed in Claim 1 wherein the short arm portion (38) is disposed at an angle to the long arm portion (39).

7. A crusher belt tensioning apparatus (14) as claimed in any of Claims 1 to 6 wherein the apparatus further comprises a lock (51) to lock the apparatus (14) in the first belt tensioning operating position.

8. A crusher belt tensioning apparatus (14) as claimed in any of Claims 1 to 7 wherein the apparatus (14) comprises a shock absorber (52) to dampen shock on the apparatus (14).

9. A crusher belt tensioning apparatus (14) as claimed in Claim 8 wherein the shock absorber (52) comprises semi-bonded bushes (52).

10. A crusher belt tensioning apparatus (14) as claimed in any of Claim 1 to 9 wherein the tension drum (36) comprises remotely greasable internal bearings.

11. A crusher (13) comprising a crusher belt tensioning apparatus (14) as claimed in any of Claims 1 to 10.

12. A crusher (13) as claimed in Claim 11 wherein the crusher belt tensioning apparatus (14) is operable independently of crushing operations.

13. A crusher (13) as claimed in Claim 11 or Claim 12 wherein the crusher (13) is an impact, jaw or cone crusher (13).

## Patentansprüche

1. Brecherriemen-Spanneinrichtung (14) zum Montieren an einem Brecher (13), aufweisend:
eine angetriebene Brecherscheibe (27) zum Betätigen eines Brechers (13);
eine Antriebsscheibe (28), die durch eine Antriebseinheit antreibbar ist;
einen Riemen (29), der sich zwischen der Brecherscheibe (27) und der Antriebsscheibe (28) erstreckt, um Antrieb von der Antriebseinheit auf den Brecher (13) zu übertragen;
eine Spanntrommel (36), die auf einem Spannarm (37) montiert ist, um eine Spannkraft auf den Riemen (29) anzuwenden, wobei der Spannarm (37) einen ersten kurzen Armabschnitt (38) und einen zweiten langen Armabschnitt (39), der mit dem ersten kurzen Armabschnitt (38) verbunden ist und länger als der kurze Armabschnitt (38) ist, umfasst,
wobei die Spanntrommel (36) durch einen Hydraulikzylinder (45), der an dem relativ kurzen Armabschnitt (38) angebracht ist, zwischen einer ersten Riemenspannbetriebsposition, in der die Spanntrommel (36) Spannung auf den Riemen (29) anwendet, und einer zweiten Riemen-Nichtspann-Wartungsposition, in der der Riemen (29) von der Spanneinrichtung (14) abnehmbar ist, bewegbar ist,
wobei der Spannarm (37) zwischen der ersten Riemenspannbetriebsposition und der zweiten Riemen-Nichtspann-Wartungsposition um einen Drehpunkt (41), der am kurzen Armabschnitt (38) des Spannarms (37) definiert ist, bogenförmig bewegbar ist,
**dadurch gekennzeichnet, dass** die Einrichtung (14) einstellbare Lagergehäuse (50) zwischen dem Drehpunkt (41) und dem Spannarm (37) umfasst und so konfiguriert ist, dass sie eine Riemenausrichtung in mehrere Richtungen ermöglicht.

2. Brecherriemen-Spanneinrichtung (14) nach Anspruch 1, wobei der Spannarm (37) ein fernbedienbarer Spannarm (37) ist.

3. Brecherriemen-Spanneinrichtung (14) nach Anspruch 1 oder Anspruch 2, wobei der Riemen (29) einen Riemenkreislauf definiert, der einen inneren Bereich (32) aufweist, der von dem Riemen (29) umschlossen wird, und die Spanntrommel (36) außerhalb des inneren Bereichs (32) angeordnet ist, sodass die Spanntrommel (36) mit einer Außenseite (35) des Riemens (29) in Kontakt steht.

4. Brecherriemen-Spanneinrichtung (14) nach Anspruch 1 oder Anspruch 2, wobei der Riemen (29) einen Riemenkreislauf definiert, der einen inneren Bereich (32) aufweist, der von dem Riemen (29) umschlossen wird, und die Spanntrommel (36) innerhalb des inneren Bereichs (32) angeordnet ist, sodass die Spanntrommel (36) mit einer Innenseite (34) des Riemens (29) in Kontakt steht.

5. Brecherriemen-Spanneinrichtung (14) nach Anspruch 1, wobei der kurzarmige Abschnitt (38) an einer Zapfenstiftbefestigung (42) am Drehpunkt (41) angebracht ist.

6. Brecherriemen-Spanneinrichtung (14) nach Anspruch 1, wobei der kurze Armabschnitt (38) in einem Winkel zum langen Armabschnitt (39) angeordnet ist.

7. Brecherriemen-Spanneinrichtung (14) nach einem der Ansprüche 1 bis 6, wobei die Einrichtung weiter eine Verriegelung (51) zum Verriegeln der Einrichtung (14) in der ersten Bandspannbetriebsposition umfasst.

8. Brecherriemen-Spanneinrichtung (14) nach einem der Ansprüche 1 bis 7, wobei die Einrichtung (14) einen Stoßdämpfer (52) umfasst, um Stöße auf die Einrichtung (14) zu dämpfen.

9. Brecherriemen-Spanneinrichtung (14) nach Anspruch 8, wobei der Stoßdämpfer (52) halbverbundene Buchsen (52) umfasst.

10. Brecherriemen-Spanneinrichtung (14) nach einem der Ansprüche 1 bis 9, wobei die Spanntrommel (36) fernschmierbare Innenlager umfasst.

11. Brecher (13), der eine Brecherriemen-Spanneinrichtung (14) nach einem der Ansprüche 1 bis 10 umfasst.

12. Brecher (13) nach Anspruch 11, wobei die Brecherriemen-Spanneinrichtung (14) unabhängig von Brechbetrieben bedienbar ist.

13. Brecher (13) nach Anspruch 11 oder Anspruch 12, wobei der Brecher (13) ein Prall-, Backen- oder Kegelbrecher (13) ist.

## Revendications

1. Appareil de tension de courroie de broyeur (14) destiné à être monté sur un broyeur (13), présentant :
une poulie de broyeur entraînée (27) pour actionner un broyeur (13) ;
une poulie d'entraînement (28) pouvant être entraînée par une unité de puissance ;
une courroie (29) s'étendant entre la poulie de broyeur (27) et la poulie d'entraînement (28) pour transférer un entraînement de l'unité de puissance au broyeur (13) ;
un tambour de tension (36) monté sur un bras de tension (37) pour appliquer une force de tension à la courroie (29), le bras de tension (37) comprenant une première partie de bras courte (38) et une seconde partie de bras longue (39) reliée à la première partie de bras courte (38) et qui est plus longue que la partie de bras courte (38),
dans lequel le tambour de tension (36) peut se déplacer au moyen d'un vérin hydraulique (45) fixé à la partie de bras relativement courte (38) entre une première position de fonctionnement de tension de courroie dans laquelle le tambour de tension (36) applique une tension à la courroie (29), et une seconde position de maintenance de non-tension de courroie dans laquelle la courroie (29) peut être retirée de l'appareil de tension (14),
dans lequel le bras de tension (37) peut se déplacer de manière arquée entre la première position de fonctionnement de tension de courroie et la seconde position de maintenance de non-tension de courroie autour d'un point de pivotement (41) défini sur la partie de bras courte (38) du bras de tension (37),
**caractérisé en ce que** l'appareil (14) comprend des logements de palier ajustables (50) entre le point de pivotement (41) et le bras de tension (37) et configurés pour permettre un alignement de courroie multidirectionnel.

2. Appareil de tension de courroie de broyeur (14) selon la revendication 1, dans lequel le bras de tension (37) est un bras de tension (37) pouvant être actionné à distance.

3. Appareil de tension de courroie de broyeur (14) selon la revendication 1 ou la revendication 2, dans lequel la courroie (29) définit un circuit de courroie présentant une région interne (32) entourée par la courroie (29) et le tambour de tension (36) est disposé à l'extérieur de la région interne (32) de telle sorte que le tambour de tension (36) soit en contact avec une face externe (35) de la courroie (29).

4. Appareil de tension de courroie de broyeur (14) selon la revendication 1 ou la revendication 2, dans lequel la courroie (29) définit un circuit de courroie présentant une région interne (32) entourée par la courroie (29) et le tambour de tension (36) est disposé à l'intérieur de la région interne (32) de telle sorte que le tambour de tension (36) soit en contact avec une face interne (34) de la courroie (29).

5. Appareil de tension de courroie de broyeur (14) selon la revendication 1, dans lequel la partie de bras courte (38) est montée sur un support à goupille (42) au niveau du point de pivotement (41).

6. Appareil de tension de courroie de broyeur (14) selon la revendication 1, dans lequel la partie de bras courte (38) est disposée à un angle par rapport à la partie de bras longue (39).

7. Appareil de tension de courroie de broyeur (14) selon l'une quelconque des revendications 1 à 6, dans lequel l'appareil comprend en outre un verrou (51) pour verrouiller l'appareil (14) dans la première position de fonctionnement de tension de courroie.

8. Appareil de tension de courroie de broyeur (14) selon l'une quelconque des revendications 1 à 7, dans lequel l'appareil (14) comprend un amortisseur de choc (52) pour amortir les chocs sur l'appareil (14).

9. Appareil de tension de courroie de broyeur (14) selon la revendication 8, dans lequel l'amortisseur de choc (52) comprend des bagues semi-collées (52).

10. Appareil de tension de courroie de broyeur (14) selon l'une quelconque des revendications 1 à 9, dans lequel le tambour de tension (36) comprend des paliers internes pouvant être graissés à distance.

11. Broyeur (13) comprenant un appareil de tension de courroie de broyeur (14) selon l'une quelconque des revendications 1 à 10.

12. Broyeur (13) selon la revendication 11, dans lequel l'appareil de tension de courroie de broyeur (14) peut fonctionner indépendamment d'opérations de broyage.

13. Broyeur (13) selon la revendication 11 ou la revendication 12, dans lequel le broyeur (13) est un broyeur à percussion, à mâchoires ou à cône (13).
